# EUROPÄISCHE PATENTSCHRIFT

(11) **EP 0 603 155 B1**
(45) Veröffentlichungstag und Bekanntmachung des Hinweises auf die Patenterteilung: **23.10.1996**
(21) Anmeldenummer: 93890242.6
(22) Anmeldetag: 14.12.1993
(51) Int. Cl.: B23K 3/03

(54) **Elektrische Lötvorrichtung**
Electric soldering device
Dispositif de brasage tendre électrique

(30) Priorität: 14.12.1992 DE 9216992 U
(43) Veröffentlichungstag der Anmeldung: 22.06.1994
(73) Patentinhaber: Biro, Laszlo, H-4551 Nyiregyaza (HU); Molnar, Franz, H-4551 Nyiregyaza-Oros (HU); Toth, Attila, A-4030 Linz (AT)
(72) Erfinder: Biro, Laszlo, H-4551 Nyiregyaza (HU); Molnar, Franz, H-4551 Nyiregyaza-Oros (HU); Toth, Attila, A-4030 Linz (AT)
(74) Vertreter: Brauneiss, Leo, Dipl.Ing.

(56) Entgegenhaltungen:
- US-A- 2 814 712

## Beschreibung

Die Erfindung betrifft eine elektrische Lötvorrichtung, mit einem in einem Gehäuse untergebrachten Transformator, dessen Primärwicklung über eine Anspeiseleitung mit einem Wechselstromnetz verbindbar ist, beispielsweise über ein mit einem Stecker versehenes Kabel an eine Steckdose anschließbar ist, und dessen Sekundärwicklung an einen schlaufenförmig gebogenen, den Arbeitskopf bildenden Widerstandsdraht angeschlossen ist. Derartige elektrische Lötvorrichtungen, in der Regel wegen ihrer pistolenähnlichen Form als Lötpistolen bezeichnet, sind bereits bekannt. Wird die Primärwicklung des Transformators an ein übliches Wechselstromnetz mit einer Spannung von 220V und einer Frequenz von 50 Hz angeschlossen, so fließt in dem den Arbeitskopf bildenden Widerstandsdraht ein Strom beträchtlicher Stromstärke, wodurch der Widerstandsdraht rasch auf eine Temperatur erhitzt wird, bei welcher das Lot, wenn es mit dem Widerstandsdraht in Berührung gebracht wird, schmilzt. Derartige Lötvorrichtungen können daher auch zum Entlöten verwendet werden, wobei beispielsweise ein Arbeitskopf entsprechend der AT-PS 374 392 benützt werden kann.

Nachteilig ist bei den bekannten elektrischen Lötvorrichtungen das verhältnismäßig große Gewicht, welches durch den Einbau des erforderlichen Transformators hervorgerufen wird, der im Gehäuse untergebracht ist. Das Gewicht des Transformators wird hiebei in der Hauptsache durch den aus Transformatorenblech zusammengesetzten Kern bestimmt. Das verhältnismäßig große Gewicht der bekannten Lötvorrichtungen bewirkt eine rasche Ermüdung der Hand des Arbeiters, so daß ein exaktes Führen des Arbeitskopfes an einer Lötstelle erschwert wird, was insbesondere bei kleinen, eng nebeneinander liegenden Lötstellen einen wesentlichen Nachteil darstellt.

Um das Gewicht derartiger Lötvorrichtungen zu verringern, hat man bereits vorgeschlagen, in die Anspeiseleitung einen Frequenzwandler einzuschalten, so daß der Transformator mit einer gegenüber der Frequenz des Wechselstromnetzes (50 Hz) erhöhten Frequenz, insbesondere mit einer Frequenz im Kilohertz-Bereich angespeist wird. Dadurch ist es zwar möglich, den Transformatorkern ohne Leistungsverluste kleiner zu dimensionieren und dadurch das Gewicht zu reduzieren, eine optimale Ausbildung der Lötvorrichtung wird jedoch auch hiedurch nicht erzielt, vor allem deshalb, da auch bei der bekannten Anordnung der Transformator immer nach beträchtliche Abmessungen aufweist. Diese Abmessungen werden auch dadurch vergrößert, daß bei den bekannten Lötvorrichtungen der Transformator eine Tertiärwicklung aufweist, die mit einer Kontrollampe elektrisch leitend verbunden ist.

Die vorliegende Erfindung hat sich zur Aufgabe gestellt, die erwähnten Nachteile zu vermeiden und eine elektrische Lötvorrichtung zu schaffen, bei welcher Gewicht und Abmessungen gegenüber den bekannten Lötvorrichtungen gleicher Leistung verringert sind. Zur Lösung dieser Aufgabe schlägt die Erfindung vor, daß die Sekundärwicklung des Transformators aus einer die Spule mit der Primärwicklung umgebenden zylindrischen Hülse aus metallischem Material, vorzugsweise aus Kupfer, besteht, die mit einem etwa parallel zur Zylinderachse verlaufenden durchgehenden Schlitz versehen ist, und daß der Widerstandsdraht an den beiden gegenüberliegenden Randbereichen des Schlitzes angeschlossen ist. Die Sekundärwicklung besteht somit aus lediglich einer einzigen, infolge der Ausbildung aus einer zylindrischen Hülse einen großen Querschnitt aufweisenden Wicklung, so daß die Abmessungen des Transformators und auch das Gewicht verringert werden und auch das Gehäuse kleiner und daher handlicher gestaltet werden kann. Die erfindungsgemäß ausgebildete Lötvorrichtung ermöglicht weiters eine vorteilhafte Anspeisung der Kontrollampe durch eine Ausbildung, bei der die elektrische Verbindung des Widerstandsdrahtes mit den Randbereichen des Schlitzes über zwei im Gehäuse parallel zueinander und in Abstand voneinander angeordnete, elektrisch leitende Stäbe erfolgt, wobei zwischen den Stäben ein stabförmiger Spulenkern aus ferromagnetischem Material angeordnet ist und die Wicklung der Spule mit einer Kontrollampe elektrisch verbunden ist. Für die Anspeisung der Kontrollampe ist somit keine Tertiärwicklung des Transformators erforderlich, sondern die für diese Anspeisung vorgesehene Spule ist in Bereich der elektrisch leitenden Stäbe, über welche die Anspeisung des Widerstandsdrahtes erfolgt, die ohnedies vom Gehäuse umgeben sind und wo somit für diese Spule Platz zur Verfügung ist. Die erfindungsgemäße Ausbildung weist weiters den Vorteil auf, daß in der Spule nur dann eine Spannung indiziert wird und daher die Kontrollampe nur dann aufleuchtet, wenn in den elektrisch leitenden Stäben und somit im Widerstandsdraht ein Strom fließt, also sich tatsächlich die Lötvorrichtung im Betriebszustand befindet, in welchem der Widerstandsdraht erhitzt wird.

Eine optimale Unterbringung auch bei kleinem Abstand der beiden elektrisch leitenden Stäbe ergibt sich dann, wenn der Spulenkern seitlich aus der Spule herausragt, wobei lediglich der herausragende Teil des Spulenkernes zwischen den beiden elektrisch leitenden Stäben angeordnet ist. Dieser seitlich aus der Spule herausragende Teil des Spulenkernes weist einen verhältnismäßig kleinen Durchmesser auf, so daß dieser Teil zwischen den Stäben leicht angeordnet werden kann, wogegen die einen größeren Durchmesser aufweisende Spule oberhalb oder unterhalb der durch die beiden elektrisch leitenden Stäbe definierten Ebene angeordnet werden kann.

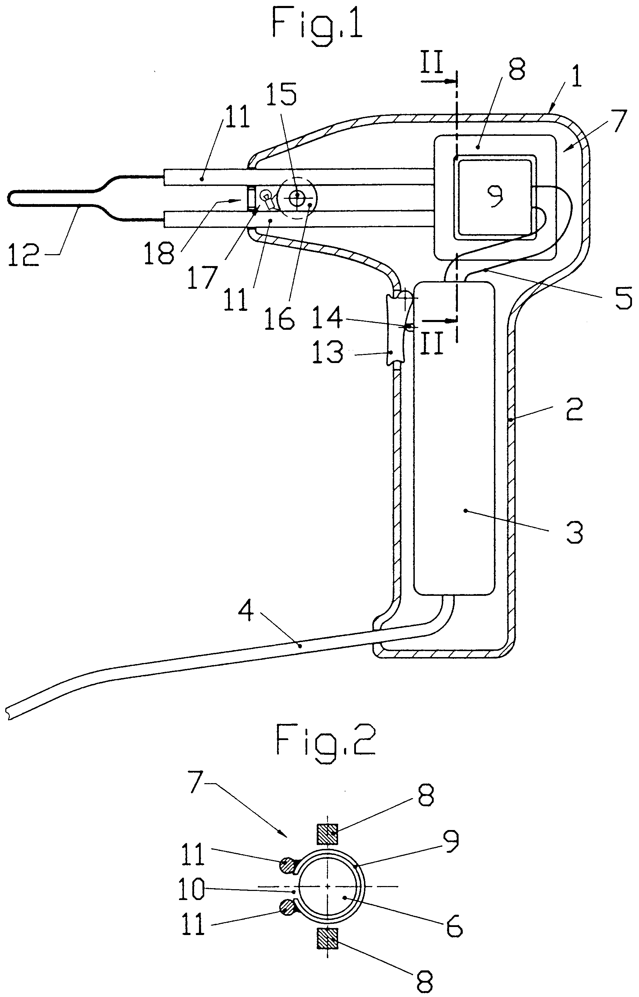

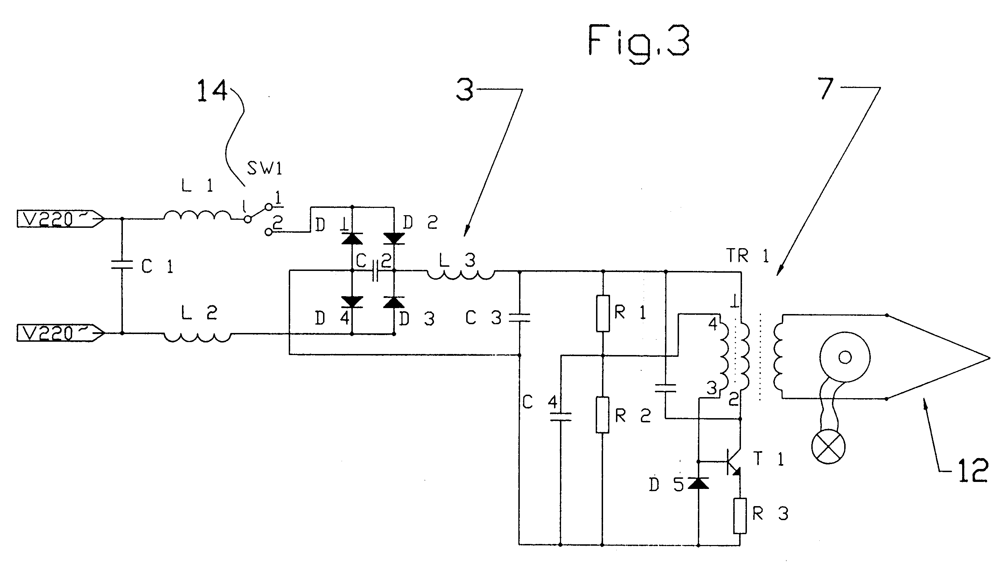

In der Zeichnung ist die Erfindung anhand eines Ausführbeispieles schematisch veranschaulicht. Fig.1 zeigt einen Längsschnitt durch eine erfindungsgemäße elektrische Lötvorrichtung. Fig.2 stellt einen Schnitt lediglich durch den Transformator nach der Linie II-II in Fig.1 dar. Fig.3 zeigt das Schaltbild des Frequenzwandlers mit dem Transformator.

Die elektrische Lötvorrichtung weist ein Gehäuse 1 auf, das in üblicher Weise aus zwei miteinander durch Schrauben od.dgl. verbundenen Teilen besteht, so daß das Innere des Gehäuses zugänglich ist. Das Gehäuse 1 ist pistolenartig ausgebildet und weist einen Griff 2 auf, in dem ein Frequenzwandler 3 üblicher Bauart untergebracht ist. Der Frequenzwandler 3 wird über ein Kabel 4 aus einem üblichen Wechselstromnetz mit einer Spannung von 220 V und einer Frequenz von 50 Hz angespeist. Hierzu ist das Kabel 4 mit einem nicht dargestellten Stecker versehen, der in eine Steckdose eingesteckt werden kann.

Im Frequenzwandler 3 erfolgt eine Erhöhung der Frequenz auf einen Wert im Kilohertz-Bereich, beispielsweise zwischen 10 und 25 kHz. Mit dieser Frequenz erfolgt über im Inneren des Gehäuses vorgesehene Leitungen 5 die Anspeisung der Primärwicklung 6 eines gleichfalls im Gehäuse 1 untergebrachten Transformators 7, der mit einem Transformatorkern 8 versehen ist.

Wie aus Fig.2 hervorgeht, besteht die Sekundärwicklung des Transformators aus einer die Spule mit der Primärwicklung 6 umgebenden Kupferhülse 9, die mit einem etwa parallel zur Zylinderachse verlaufenden durchgehenden Schlitz 10 versehen ist, so daß diese Sekundärwicklung aus einer einzigen Windung besteht. An den gegenüberliegenden Randbereichen des Schlitzes 10 sind parallel zueinander und in Abstand voneinander angeordnete Kupferstäbe 11 angelötet, die aus dem Gehäuse 1 nach außen führen und an welchen ein schlaufenförmig gebogener, den Arbeitskopf bildender Widerstandsdraht 12 angeschlossen ist.

Zwischen den beiden Kupferstäben 11 befindet sich ein stabförmiger Spulenkern 15 aus ferromagnetischem Material, der seitlich aus einer Spule 16 herausragt, die unterhalb der durch die beiden Kupferstäbe 11 definierten Ebene angeordnet ist und deren Durchmesser somit größer sein kann als der Abstand zwischen den beiden Kupferstäben 11. Die Enden der Wicklung der Spule 16 sind mit einer Kontrollampe 17 elektrisch leitend verbunden, die durch ein Fenster 18 im Gehäuse 1 sichtbar ist.

Ist die erfindungsgemäße Lötvorrichtung im Betrieb, fließt somit in den beiden Kupferstäben 11 Strom, der eine Erhitzung des Widerstandsdrahtes 12 bewirkt, so wird unter Vermittlung des Spulenkernes 15 in der Wicklung der Spule 16 eine Spannung indiziert, so daß in der Spulenwicklung ein Strom fließt, der die Kontrollampe 17 zum Leuchten bringt.

Das Einschalten der Lötvorrichtung erfolgt durch eine im Gehäuse schwenkbar gelagerte Wippe 13, die mit einem im Frequenzwandler 3 vorgesehenen Schalter 14 zusammenwirkt.

## Patentansprüche

1. Elektrische Lötvorrichtung, mit einem in einem Gehäuse (1) untergebrachten Transformator (7), dessen Primärwicklung (6) über eine Anspeiseleitung (4,5) mit einem Wechselstromnetz verbindbar ist, beispielsweise über ein mit einem Stecker versehenes Kabel an eine Steckdose anschließbar ist, wobei vorzugsweise in die Anspeiseleitung (4,5) ein Frequenzwandler (3) eingeschaltet ist, so daß der Transformator (7) mit einer gegenüber der Frequenz des Wechselstromnetzes erhöhten Frequenz, insbesondere mit einer Frequenz im Kilohertz-Bereich, angespeist wird, und dessen Sekundärwicklung (9) an einem schlaufenförmig gebogenen, den Arbeitskopf bildenden Widerstandsdraht (12) angeschlossen ist, dadurch gekennzeichnet, daß die Sekundärwicklung des Transformators (7) aus einer die Spule mit der Primärwicklung (6) umgebenden zylindrischen Hülse (9) aus metallischem Material, vorzugsweise aus Kupfer, besteht, die mit einem etwa parallel zur Zylinderachse verlaufenden durchgehenden Schlitz (10) versehen ist, und daß der Widerstandsdraht (12) an den beiden gegenüberliegenden Randbereichen des Schlitzes (10) angeschlossen ist.

2. Lötvorrichtung nach Anspruch 1, dadurch gekennzeichnet, daß die elektrische Verbindung des Widerstandsdrahtes (12) mit den Randbereichen des Schlitzes (10) über zwei im Gehäuse (1) parallel zueinander und in Abstand voneinander angeordnete, elektrisch leitende Stäbe (11) erfolgt und daß zwischen den Stäben (11) ein stabförmiger Spulenkern (15) aus ferromagnetischem Material angeordnet ist und die Wicklung der Spule (16) mit einer Kontrollampe (17) elektrisch verbunden ist.

3. Lötvorrichtung nach Anspruch 2, dadurch gekennzeichnet, daß der Spulenkern (15) seitlich aus der Spule (16) herausragt, wobei lediglich der herausragende Teil des Spulenkernes (15) zwischen den beiden elektrisch leitenden Stäben (11) angeordnet ist.

## Claims

1. Electric soldering device, with a transformer (7) lodged in a housing (1), the primary winding (6) of the transformer (7) being connectable to an alternating current network via a supply line (4,5), for instance attachable to a socket via a cable provided with a plug, a frequency transformer (3) preferably being inserted in the supply line (4,5), so that the transformer (7) is supplied with a frequency higher than the frequency of the alternating current network, in particular with a frequency in the kilohertz range, the secondary winding (9) of the transformer (7) being connected to a looped resistance wire (12) forming the working head, characterized in that the secondary winding of the transformer (7) consists of a cylindrical bush (9) of metallic material, preferably copper, enclosing the coil with the primary winding (6) and provided with a continuous slot (10) extending approximately parallel to the cylinder axis, and that the resistance wire (12) is connected to the two opposing marginal areas of the slot (10).

2. The soldering device according to claim 1, characterized in that the electrical connection of the resistance wire (12) to the marginal areas of the slot (10) is effected via two electrically conductive rods (11) disposed parallel to and spaced from one another in the housing (1), that a rod-shaped coil core (15) of ferromagnetic material is disposed between the rods (11) and that the winding of the coil (16) is electrically connected to a control lamp (17).

3. The soldering device according to claim 2, characterized in that the coil core (15) laterally projects from the coil (16), with solely the projecting portion of the coil core (15) being disposed between the two electrically conductive rods (11).

## Revendications

1. Dispositif de brasage tendre électrique, avec un transformateur (7) disposé dans un carter (1), l'enroulement du circuit primaire (6) du transformateur (7) étant reliable à un réseau alternatif par une ligne d'alimentation (4,5), par exemple connectable à une prise de courant par un câble pourvu d'une prise mâle, un transformateur de fréquence (3) étant de préférence inséré dans la ligne d'alimentation (4,5), tel que le transformateur (7) est alimenté avec une fréquence élevée par rapport à la fréquence du réseau alternatif, en particulier une fréquence du domaine kilocycle, son enroulement secondaire (9) relié à un fil de résistance (12) courbé en forme de boucle et formant la tête opératoire, caractérisé en ce que l'enroulement secondaire du transformateur (7) consiste en une cosse (9) cylindrique en matériau métallique, de préférence en cuivre, enfermant la bobine de l'enroulement primaire (6), la cosse (9) étant pourvue d'une fente (10) continue s'étendant à-peu-près parallèle par rapport à l'axe du cylindre, et que le fil de résistance (12) est relié aux deux régions marginales opposées de la fente (10).

2. Dispositif de brasage selon la revendication 1, caractérisé en ce que la liaison électrique du fil de résistance (12) aux régions marginales de la fente (10) est effectuée par deux barres (11) électroconducteuses disposées dans le carter (1) parallèles et à distance l'une par rapport à l'autre, qu'un noyau de bobine (15) en forme de barre en matériau ferromagnétique est disposé entre les barres (11) et que l'enroulement de la bobine (16) est électriquement relié à une lampe de contrôle (17).

3. Dispositif de brasage selon la revendication 2, caractérisé en ce que le noyau de bobine (15) saillit latéralement de la bobine (16), seulement la partie projettante du noyau de bobine (15) étant disposée entre les deux barres (11) électroconducteuses.
